# FASCICULE DE BREVET EUROPEEN

(11) **EP 0 547 923 B1**
(45) Date de publication et mention de la délivrance du brevet: **22.10.1997**
(21) Numéro de dépôt: 92402235.3
(22) Date de dépôt: 05.08.1992
(51) Int. Cl.: C04B 18/10, C04B 28/08, B09B 3/00

(54) **Procédé pour stabiliser et solidifier des produits d'incinération d'ordures ménagères, produits résultant du procédé et produits pour sa mise en oeuvre**
Verfahren zum Stabilisieren und Festwerden von Veraschungsprodukten von Hausmüll, die so erhaltenen Produkte und Produkte zur Durchführung des Verfahrens
Process for stabilising and solidifying incineration products of municipal waste, products resulting from this process and products for its implementation

(30) Priorité: 18.12.1991 FR 9115712
(43) Date de publication de la demande: 23.06.1993
(73) Titulaire: COMPAGNIE DU SOL, 92000 Nanterre (FR)
(72) Inventeur: Cojan, Jean-Yves, F-94160 Saint Mande (FR)
(74) Mandataire: Nony, Michel

(56) Documents cités:
- EP-A- 0 389 328
- WO-A-87/06758
- FR-A- 2 408 372
- GB-A- 2 224 024
- US-A- 4 209 335
- US-A- 4 624 711
- CHEMICAL ABSTRACTS, vol. 105, no. 26, Décembre 1986, Columbus, Ohio, US; abstract no. 231526d, M. WAKIMURA 'SOLIDIFICATION OF INCINERATOR ASH' page 299

## Description

La présente invention a pour objet un procédé pour stabiliser et solidifier les produits d'incinération d'ordures ménagères, les produits résultant de ce procédé et des produits pour sa mise en oeuvre.

On sait que l'incinération des ordures ménagères s'accompagne d'un dégagement de fumées qui contiennent des éléments toxiques dangereux pour l'homme et son environnement.

La toxicité de ces fumées résulte principalement du fait qu'elles contiennent ce que l'on désigne sous le terme de "cendres volantes" qui sont en l'espèce constituées par des résidus solides issus directement de la combustion des déchets. Pour empêcher la pollution de l'air ambiant par de telles fumées toxiques, il est connu de les épurer à l'aide d'un dépoussiéreur qui recueille la quasi totalité des cendres volantes qu'elles contiennent.

Dans la mesure du possible, les résidus d'incinération des ordures ménagères sont réutilisés ou valorisés de différentes manières.

En particulier, il est connu de réaliser des remblais à l'aide d'un mélange de cendres volantes et de mâchefers.

Cependant, les cendres volantes qui renferment les éléments fortement polluants peuvent être délavées par la pluie ou l'eau contenue dans le sol, ce qui représente un danger pour l'environnement en raison de la teneur élevée de ces cendres volantes en composés organiques comme les dioxynes et les furannes ou en métaux lourds tels que le plomb, qui est bien supérieure aux teneurs admissibles pour qu'elles soient autorisées à être déposées dans les décharges.

En effet, le stockage de telles cendres volantes non traitées mélangées à d'autres déchets présente des risques de destabilisation des cendres du fait des nombreuses réactions chimiques qui peuvent se déclencher dans la décharge et conduire au dégagement d'hydrogène sulfuré, à la solubilisation des composés organiques et à la resolubilisation des métaux lourds.

La présente invention vise à pallier ces inconvénients en proposant un procédé simple et économique permettant la neutralisation des cendres volantes dans de bonnes conditions de sécurité.

La présente invention a pour objet un procédé de stabilisation et de solidification de cendres ou de résidus de déchloruration des fumées résultant de l'incinération d'ordures ménagères, consistant à les incorporer dans un liant aqueux formé principalement par une poudre d'un produit à base de laitier de haut-fourneau, tout en les mettant en présence d'un sulfate ou d'un carbonate ou d'une combinaison des deux, à un pH compris ente 8 et 13 et de préférence entre 9,5 et 12,5, caractérisé par le fait que les cendres ou les résidus sont également mis en présence de chaux magnésienne.

Le pH sera de préférence compris entre 12 et 13.

La proportion en poids de chaux magnésienne est avantageusement comprise entre 5 et 50 % par rapport au liant hydraulique.

Conformément à l'invention, la proportion de chaux magnésienne est comprise par exemple entre environ 0,2 et 5 kg, et de préférence entre environ 0,4 et 4 kg pour 1 kg de sulfate, exprimé en sulfate.

Conformément à l'invention, la proportion de chaux magnésienne et de sulfate soluble est par exemple d'environ 5 à 120 kg, et de préférence d'environ 7 à 70 kg pour 100 kg de liant.

Conformément à l'invention, 100 kg de cendres ou de résidus résultant de l'incinération d'ordures ménagères peuvent être par exemple mis en présence d'environ 5 à 100 kg et de préférence d'environ 10 à 70 kg du mélange de liant, de chaux magnésienne et de sulfate et/ou de carbonate.

La présente invention a également pour objet le produit solide obtenu par mise en oeuvre du procédé décrit ci-dessus, caractérisé par le fait qu'il comporte des cendres ou des résidus de déchloruration des fumées résultant de l'incinération d'ordures ménagères et des produits résultant des réactions chimiques entres ces cendres ou résidus, la chaux magnésienne et le sulfate ou le carbonate à un pH compris entre 8 et 13 et de préférence entre 9,5 et 12,5, le tout étant incorporé dans un liant qui a fait sa prise et qui est formé principalement par une poudre d'un produit à base de laitier.

On comprend que le produit obtenu selon l'invention est composé principalement de cendres volantes ou de résidus de déchloruration de fumées qui sont emprisonnées dans une matrice compacte continue et homogène présentant une bonne résistance mécanique et capable de retenir les polluants solubles tels que les chlorures ou les métaux lourds.

Ces qualités de la matrice résultent des conditions favorables dans lesquelles le produit à base de laitier peut effectuer sa prise sans être trop perturbé par les éléments contenus dans les produits d'incinération d'ordures ménagères.

Le produit ainsi obtenu est stable et possède un pH élevé, ce qui garantit une très faible résolubilisation des métaux lourds puisque ce phénomène résulte principalement d'une diminution de la basicité du mélange.

Par poudre d'un produit à base de laitier, on entend selon l'invention, par exemple du laitier de haut-fourneau broyé, du ciment de laitier de haut-fourneau, du ciment CHF ou toute autre poudre d'un produit contenant du laitier de haut-fourneau.

Conformément à l'invention, le produit à base de laitier a par exemple des dimension de grains inférieures à 200µm et de préférence inférieures à 100 µm.

La présente invention a également pour objet un produit pour la mise en oeuvre du procédé décrit ci-dessus.

Selon un premier mode de réalisation, ce produit est constitué par le mélange d'un liant aqueux formé principalement par une poudre d'un produit à base de laitier, avec de la chaux magnésienne et un sulfate à un pH compris entre 8 et 13 et de préférence entre 9,5 et 12,5 à raison d'environ 1,5 à 60 kg et de préférence d'environ 4 à 40 kg de chaux magnésienne et d'environ 2 à 60 kg et de préférence d'environ 3 à 30 kg de sulfate soluble pour 100 kg de liant.

Le sulfate peut, selon ce mode de réalisation, être par exemple apporté sous forme de sulfate de magnésium, de potassium ou de sodium, ou sous forme d'hydrogénosulfate de sodium ou de potassium, ou de sulfate de calcium.

Selon un second mode de réalisation, le produit pour la mise en oeuvre du procédé décrit ci-dessus est constitué par le mélange d'un liant aqueux formé principalement par une poudre d'un produit à base de laitier, avec de la chaux magnésienne et un carbonate et/ou un hydrogénocarbonate alcalin, à raison d'environ 1,5 à 60 kg et de préférence d'environ 4 à 40 kg d'oxyde de magnésium, et d'environ 1 à 25 kg et de préférence d'environ 2 à 15 kg de carbonate ou d'hydrogénocarbonate alcalin pour 100 kg de liant.

Avantageusement, le carbonate alcalin est par exemple du carbonate de sodium ou de potassium, et l'hydrogénocarbonate alcalin est par exemple de l'hydrogénocarbonate de sodium ou de potassium.

Selon une variante de l'invention, il est avangageux d'ajouter au mélange une quantité d'argile jusqu'à environ 20 % en poids du liant afin d'améliorer ses propriétés de rétention à l'égard des polluants.

Il est également possible, selon une autre variante de l'invention, d'ajouter du charbon actif qui renforce l'action de rétention des produits organiques contenus dans les cendres.

Selon une autre variante, on ajoute au mélange jusqu'à environ 100 % en poids de filler, par exemple du calcite, de la dolomie ou du kaolin, ce qui a pour effet de réduire la fraction soluble du produit obtenu sans altérer ses propriétés mécaniques et chimiques.

Une autre variante peut consister en l'apport de fumée de silice jusqu'à environ 50 % en poids.

Dans le but de mieux faire comprendre l'invention, on va en décrire maintenant plusieurs modes de mise en oeuvre donnés à titres d'exemples non limitatifs de la portée de l'invention.

### Exemple 1

Pour stabiliser et solidifier une tonne de cendres volantes résultant de l'incinération d'ordures ménagères, on la mélange intimement à une composition ayant la formule suivante :

| | |
|---|---|
| Poudre de laiter de haut-fourneau | 250 kg |
| Sulfate de magnésium | 25 kg |
| Oxyde de magnésium | 35 kg |
| Eau | 600 litres |
| Argile | 30 kg |
| Filler (dolomie) | 175 kg |

Après 7 jours, le mélange a une résistance de l'ordre de 40 à 60 bars, cette résistance est portée à 200 bars après 28 jours.

La fraction soluble totale du produit solide obtenu est de l'ordre de 3%, valeur qui est 10 fois inférieure à celle des cendres volantes initiales.

### Exemple 2

Pour stabiliser et solidifier une tonne de cendres volantes résultant de l'incinération d'ordures ménagères, on la mélange intimement à une composition ayant la formule suivante :

| | |
|---|---|
| Poudre de laitier de haut-fourneau | 460 kg |
| Oxyde de magnésium | 60 kg |
| Sulfate de magnésium | 50 kg |
| Eau | 600 litres |
| Charbon actif | 15 kg |

La résistance à 7 jours du produit solide obtenu est de l'ordre de 150 à 180 bars. La résistance à 28 jours est d'environ 350 bars.

La fraction soluble totale du produit solide obtenu est de 4%.

### Exemple 3

Pour stabiliser et solidifier une tonne de cendres volantes, on la mélange à la composition ayant la formule suivante :

| | |
|---|---|
| Poudre de laitier de haut-fourneau | 250 kg |
| Hydrogénocarbonate de sodium | 18 kg |
| Oxyde de magnésium | 25 kg |
| Eau | 595 litres |
| Argile | 25 kg |
| Filler (calcite) | 150 kg |

La résistance à 7 jours du produit solide obtenu est d'environ 100 bars, sa résistance à 28 jours d'environ 300 bars.

La fraction soluble totale est de 4%.

### Exemple 4

Pour stabiliser et solidifier une tonne de cendres volantes, on la mélange intimement à une composition ayant la formule suivante :

| | |
|---|---|
| Ciment de laitier | 440 kg |
| Chaux magnésienne (Dolomie calcinée) | 150 kg |
| Sulfate de magnésium | 50 kg |
| Eau | 600 litres |

La résistance à 28 jours du produit solide obtenu est de 250 bars.

La fraction soluble totale est de 1,4 %.

Le coefficient d'abattement est environ de 8.

Il est bien entendu que les modes de mise en oeuvre qui ont été décrits ne présentent aucun caractère limitatif et qu'ils pourront recevoir toutes modifications désirables sans sortir pour cela du cadre de l'invention.

## Revendications

1. Procédé de stabilisation et de solidification de cendres ou de résidus de déchloruration des fumées résultant de l'incinération d'ordures ménagères, consistant à les incorporer dans un liant aqueux formé principalement par une poudre d'un produit à base de laitier de haut-fourneau, tout en les mettant en présence d'un sulfate ou d'un carbonate ou d'une combinaison des deux à un pH compris entre 8 et 13 et de préférence entre 9,5 et 12,5, caractérisé par le fait que les cendres ou les résidus sont également mis en présence de chaux magnésienne.

2. Procédé selon la revendication 1, caractérisé par le fait que la proportion de chaux magnésienne est comprise entre environ 0,2 et 5 kg, et de préférence entre environ 0,4 et 4 kg pour 1 kg de sulfate, exprimé en sulfate.

3. Procédé selon l'une quelconque des revendications précédentes, caractérisé par le fait que la proportion de chaux magnésienne et de sulfate est d'environ 5 à 120 kg, et de préférence d'environ 7 à 70 kg pour 100 kg de liant.

4. Procédé selon l'une quelconque des revendications précédentes, caractérisé par le fait que 100 kg de cendres résultant de l'incinération d'ordures ménagères sont mises en présence d'environ 5 à 100 kg, et de préférence d'environ 10 à 70 kg du mélange de liant, de chaux magnésienne et de sulfate soluble.

5. Procédé selon l'une quelconque des revendications précédentes, caractérisé par le fait que, comme poudre de produit à base de laitier, on utilise du laitier de haut-fourneau broyé, du ciment de laitier de haut-fourneau, du ciment CHF, ou toute autre poudre d'un produit contenant du laitier de haut-fourneau.

6. Procédé selon l'une quelconque des revendications précédentes, caractérisé par le fait que le liant comporte de l'argile jusqu'à environ 20 % en poids.

7. Procédé selon l'une quelconque des revendications précédentes, caractérisé par le fait que liant comporte en outre du charbon actif.

8. Procédé selon l'une quelconque des revendications précédentes, caractérisé par le fait que le liant comporte en outre du filler jusqu'à environ 100 % en poids.

9. Procédé selon l'une quelconque des revendications précédentes, caractérisé par le fait que le liant comporte de la fumée de silice jusqu'à environ 50% en poids.

10. Produit solide obtenu par la mise en oeuvre du procédé selon l'une quelconque des revendications précédentes, caractérisé par le fait qu'il comporte des cendres et des résidus de déchloruration des fumées résultant de l'incinération d'ordures ménagères et des produits résultant des réaction chimiques entres ces cendres ou résidus, la chaux magnésienne et le sulfate ou le carbonate à un pH compris entre 8 et 13 et de préférence entre 9,5 et 12,5, le tout étant incorporé dans un liant qui a fait sa prise et qui est formé principalement par une poudre d'un produit à base de laitier.

11. Produit pour la mise en oeuvre du procédé selon l'une quelconque des revendications 1 à 10, caractérisé par le fait qu'il est constitué par le mélange d'un liant formé principalement par une poudre d'un produit à base de laitier, avec de la chaux magnésienne et un sulfate à un pH compris entre 8 et 13 et de préférence entre 9,5 et 12,5 à raison de 1,5 à 60 kg, et de préférence d'environ 4 à 40 kg dechaux magnésienne, et d'neivron 2 à 60 kg, et de préférence 3 à 30 kg de sulfate, pour 100 kg de liant.

12. Produit selon la revendication 11, caractérisé par le fait que le sulfate est du sulfate de magnésium, de calcium, de potassium et de sodium, ou un hydrogénosulfate de sodium ou de potassium.

13. Produit pour la mise en oeuvre du procédé selon l'une quelconque des revendications 1 à 10, caractérisé par le fait qu'il est constitué par le mélange d'un liant formé principalement par une poudre d'un produit à base de laitier, avec de la chaux magnésienne et un carbonate et/ou un hydrogénocarbonate alcalin, à raison d'environ 1,5 à 60 kg et de préférence d'environ 4 à 40 kg de chaux magnésienne, et d'environ 1 à 25 kg et de préférence d'environ 2 à 15 kg de carbonate ou d'hydrogénocarbonate alcalin pour 100 kg de liant.

14. Produit selon la revendication 13, caractérisé par le fait que le carbonate alcalin est du carbonate de sodium ou de potassium et l'hydrogénocarbonate alcalin est de l'hydrogénocarbonate de sodium ou de potassium.

15. Produit selon l'une quelconque des revendications 10 à 14, caractérisé par le fait qu'il comporte en outre de l'argile, et/ou du charbon actif et/ou un filler et/ou de la fumée de silice.

## Claims

1. Process for stabilisation and solidification of ash or of residues from removal of chlorides from the fumes resulting from the incineration of household waste, consisting in incorporating them in an aqueous binder made up chiefly of a powder of a product based on blast furnace slag, while placing them in contact with a sulphate or a carbonate or a combination of the two at a pH of between 8 and 13 and preferably between 9.5 and 12.5, characterised by the fact that the ash or the residues are also placed in contact with magnesium lime.

2. Process according to claim 1, characterised by the fact that the proportion of magnesium lime is between approximately 0.2 and 5 kg and preferably between approximately 0.4 and 4 kg per 1 kg of sulphate, expressed as sulphate.

3. Process according to any one of the preceding claims, characterised by the fact that the proportion of magnesium lime and of sulphate is from approximately 5 to 120 kg and preferably from approximately 7 to 70 kg per 100 kg of binder.

4. Process according to any one of the preceding claims, characterised by the fact that 100 kg of ash resulting from the incineration of household waste are placed in contact with approximately 5 to 100 kg, and preferably approximately 10 to 70 kg of the mixture of binder, lime magnesium and soluble sulphate.

5. Process according to any one of the preceding claims, characterised by the fact that the slag-based powdered product employed is ground blast furnace slag, blast furnace slag cement, CHF cement or any other powder of a product containing blast furnace slag.

6. Process according to any one of the preceding claims, characterised by the fact that the binder contains clay up to approximately 20% by weight.

7. Process according to any one of the preceding claims, characterised by the fact that the binder additionally contains active carbon.

8. Process according to any one of the preceding claims, characterised by the fact that the binder additionally contains filler up to approximately 100% by weight.

9. Process according to any one of the preceding claims, characterised by the fact that the binder contains fumed silica up to approximately 50% by weight.

10. Solid product obtained by implementing of the process according to any one of the preceding claims, characterised by the fact that it contains ash and residues from the removal of chlorides from the fumes resulting from the incineration of household waste and products resulting from chemical reactions between this ash or these residues, magnesium lime and sulphate or carbonate at a pH of between 8 and 13 and preferably between 9.5 and 12.5, the whole being incorporated in a binder which has set and which is made up chiefly of a powder of a slag-based product.

11. Product for implementing of the process according to any one of claims 1 to 10, characterised by the fact that it consists of the mixture of a binder made up chiefly of a powder of a slag-based product, with magnesium lime and a sulphate at a pH of between 8 and 13 and preferably between 9.5 and 12.5, in a proportion of 1.5 to 60 kg, and preferably of approximately 4 to 40 kg of magnesium lime, and of approximately 2 to 60 kg, and preferably 3 to 30 kg of sulphate, per 100 kg of binder.

12. Product according to claim 11, characterised by the fact that the sulphate is magnesium, calcium, potassium or sodium sulphate or a sodium or potassium hydrogensulphate.

13. Product for implementing the process according to any one of claims 1 to 10, characterised by the fact that it consists of the mixture of a binder made up chiefly of a powder of a slag-based product, with magnesium lime and an alkali metal carbonate and/or hydrogencarbonate, in a proportion of approximately 1.5 to 60 kg and preferably of approximately 4 to 40 kg of magnesium lime, and of approximately 1 to 25 kg, and preferably of approximately 2 to 15 kg of metal alkali carbonate or hydrogencarbonate, per 100 kg of binder.

14. Product according to claim 13, characterised by the fact that the alkali metal carbonate is sodium or potassium carbonate and the alkali metal hydrogencarbonate is sodium or potassium hydrogencarbonate.

15. Product according to any one of claims 10 to 14, characterised in that it additionally contains clay and/or active carbon and/or a filler and/or fumed silica.

## Patentansprüche

1. Verfahren zur Stabilisierung und Verfestigung von Asche und Rückständen der Entchlorung von bei der Müllverbrennung anfallenden Rauchgasen, bei dem man diese Asche oder Rückstände einem wäßrigen Bindemittel, das vorwiegend von einem Pulver eines Produkts auf der Basis von Hochofenschlacke gebildet wird, einverleibt, wobei man diese Asche oder Rückstände in Gegenwart eines Sulfats oder eines Carbonats oder einer Kombination von beiden bringt, und zwar bei einem pH-Wert zwischen 8 und 13 und vorzugsweise zwischen 9,5 und 12,5, dadurch gekennzeichnet, daß man diese Asche oder Rückstände auch in Gegenwart eines magnesiumhaltigen Kalkes bringt.

2. Verfahren nach einem Anspruch 1, dadurch gekennzeichnet, daß der Anteil des magnesiumhaltigen Kalkes etwa 0,2 bis 5 kg und vorzugsweise etwa 0,4 bis 4 kg pro 1 kg des Sulfats, angegeben als Sulfat, beträgt.

3. Verfahren nach einem der vorstehenden Ansprüche, dadurch gekennzeichnet, daß der Anteil des magnesiumhaltigen Kalkes und des Sulfats etwa 5 bis 120 kg und vorzugsweise etwa 7 bis 70 kg pro 100 kg des Bindemittels beträgt.

4. Verfahren nach einem der vorstehenden Ansprüche, dadurch gekennzeichnet, daß 100 kg Asche, die bei der Müllverbrennung angefallen sind, mit 5 bis 100 kg und vorzugsweise 10 bis 70 kg des Gemisches aus Bindemittel, magnesiumhaltigem Kalk und löslichem Sulfat zusammengebracht werden.

5. Verfahren nach einem der vorstehenden Ansprüche, dadurch gekennzeichnet, daß man als Pulver auf der Basis von Schlacke gemahlene Hochofenschlacke, Hochofenzement, CHF-Zement oder ein anderes Pulver eines Produkts mit einem Gehalt an Hochofenschlacke verwendet.

6. Verfahren nach einem der vorstehenden Ansprüche, dadurch gekennzeichnet, daß das Bindemittel Ton bis zu einem Anteil von etwa 20 Gew.-% enthält.

7. Verfahren nach einem der vorstehenden Ansprüche, daß das Bindemittel ferner Aktivkohle enthält.

8. Verfahren nach einem der vorstehenden Ansprüche, dadurch gekennzeichnet, daß das Bindemittel ferner einen Füllstoff bis zu einem Anteil von etwa 100 Gew.-% enthält.

9. Verfahren nach einem der vorstehenden Ansprüche, dadurch gekennzeichnet, daß das Bindemittel Siliciumrauchgase bis zu einem Anteil von etwa 50 Gew.-% enthält.

10. Festes Produkt erhalten nach dem Verfahren gemäß einem der vorstehenden Ansprüche, dadurch gekennzeichnet, daß es Asche und Rückstände der Entchlorung von bei der Müllverbrennung anfallenden Rauchgasen und Produkte, die sich durch chemische Reaktionen zwischen der Asche oder den Rückständen, dem magnesiumhaltigem Kalk und dem Sulfat oder dem Carbonat bei einem pH-Wert zwischen 8 und 13 und vorzugsweise zwischen 9,5 und 12,5 ergeben, wobei die gesamten Bestandteile einem Bindemittel einverleibt sind, das abgebunden hat und vorwiegend aus einem Pulver eines Produkts auf der Basis von Schlacke gebildet ist.

11. Produkt zur Durchführung des Verfahrens nach einem der Ansprüche 1 bis 10, dadurch gekennzeichnet, daß es aus einer Mischung eines Bindemittels, das vorwiegend aus einem Pulver eines Produkts auf der Basis von Schlacke gebildet ist, mit magnesiumhaltigem Kalk und einem Sulfat bei einem pH-Wert zwischen 8 und 13 und vorzugsweise zwischen 9,5 und 12,5 in einer Menge von 1,5 bis 60 kg und vorzugsweise von etwa 4 bis 40 kg magnesiumhaltigem Kalk und etwa 2 bis 60 kg und vorzugsweise 3 bis 30 kg Sulfat pro 100 kg Bindemittel besteht.

12. Verfahren nach Anspruch 11, dadurch gekennzeichnet, daß es sich beim Sulfat um Magnesiumsulfat, Calciumsulfat, Kaliumsulfat oder Natriumsulfat oder um Natriumhydrogensulfat oder Kaliumhydrogensulfat handelt.

13. Produkt zur Durchführung des Verfahrens nach einem der Ansprüche 1 bis 10, dadurch gekennzeichnet, daß es aus einer Mischung eines Bindemittels, das vorwiegend aus einem Pulver eines Produkts auf der Basis von Schlacke gebildet ist, mit magnesiumhaltigem Kalk und einem Alkalicarbonat und/oder einem Alkalihydrogencarbonat in einer Menge von 1,5 bis 60 kg und vorzugsweise von etwa 4 bis 40 kg magnesiumhaltigem Kalk und etwa 1 bis 25 kg und vorzugsweise 2 bis 15 kg Alkalicarbonat oder Alkalihydrogencarbonat pro 100 kg Bindemittel besteht.

14. Produkt nach Anspruch 13, dadurch gekennzeichnet, daß es sich beim Alkalicarbonat um Natrium- oder Kaliumcarbonat und beim Alkalihydrogencarbonat um Natrium- oder Kaliumhydrogencarbonat handelt.

15. Produkt nach einem der Ansprüche 10 bis 14, dadurch gekennzeichnet, daß es ferner Ton und/oder Aktivkohle und/oder einen Füllstoff und/oder Siliciumrauchgase enthält.
